# EUROPEAN PATENT SPECIFICATION

(11) **EP 2 783 842 B1**
(45) Date of publication and mention of the grant of the patent: **18.01.2017**
(21) Application number: 12865986.9
(22) Date of filing: 31.10.2012
(51) Int. Cl.: B29D 30/16, B60C 9/20, B29B 15/08, B29D 30/12, B29D 30/38, B29D 30/06, B29D 30/30, B60C 9/00, B60C 9/22

(54) **METHOD FOR MANUFACTURING PNEUMATIC TIRE**
VERFAHREN ZUR HERSTELLUNG VON LUFTREIFEN
PROCÉDÉ DE FABRICATION DE PNEUMATIQUE

(30) Priority: 20.01.2012 JP 2012010263
(43) Date of publication of application: 01.10.2014
(73) Proprietor: Sumitomo Rubber Industries, Ltd., Kobe-shi, Hyogo 651-0072 (JP)
(72) Inventor: FUKUMOTO,Toru, Kobe-shi Hyogo 651-0072 (JP)
(74) Representative: Manitz, Finsterwald & Partner GbR
(86) International application number: PCT/JP2012/078187
(87) International publication number: WO 2013/108464

(56) References cited:
- EP-A1- 1 106 390
- EP-A2- 0 335 588
- JP-A- H01 247 204
- JP-A- H04 169 304
- JP-A- H05 338 409
- JP-A- 2004 306 636
- JP-A- 2006 240 498
- JP-A- 2006 240 498
- JP-A- 2011 161 896
- US-A1- 2005 236 086
- SETSUO FUKUHARA ET AL: "Studies of tensile strength, heat-shrinkage force, and crystallinity of nylon 6 tire cords and nylon 6 films at elevated temperatures", JOURNAL OF POLYMER SCIENCE PART C: POLYMER SYMPOSIA, vol. 23, no. 2, 1 January 1968 (1968-01-01), pages 873-879, XP055190530, ISSN: 0449-2994, DOI: 10.1002/polc.5070230242

## Description

### Technical field

The present invention relates to a method for manufacturing a pneumatic tire using a rigid core.

### Background Art

A pneumatic tire of a radial structure exhibits a phenomenon called lifting that a tread portion bulges radially outwardly due to centrifugal force during rotation. This lifting causes delamination damage to the tire at an axially outer end of a belt layer as a starting point. Therefore, the lifting exerts large influence on high-speed durability of the pneumatic tire. To suppress occurrence of such lifting, it has been suggested to provide a band ply on the belt layer. The band layer includes a band cord of organic fiber being wound in a spiral form. Such a band ply suppresses lifting by hoop effect.

There is a conventionally known method for manufacturing a pneumatic tire including the steps of forming a green tire in a smaller size than a finished tire and the step of expanding the green tire in a vulcanization mold (hereinafter, also referred to as "vulcanizing stretch") and pressing the outer surface of the green tire against the inner surface of the mold to shape the vulcanized ti re. The band cord of the ti re manufactured by the foregoing method has an elongation of 3% to 4% due to vulcanizing stretch even in the state where the ti re is not charged with inner pressure. Therefore, even if a nylon cord with a comparatively small modulus is used as a band cord, the band cord exerts sufficient hoop effect to suppress lifting during usage of the tire.

Meanwhile, Patent Literature 1 suggests a method for manufacturing a tire using a rigid core with an outer surface analogous to the inner surface shape of a finished ti re (hereinafter, referred to as "core method"). According to the core method, non-vulcanized tire constitutional members such as a carcass ply, a belt ply, a band ply, a bead core, a tread rubber, and a side wall rubber are attached in sequence to the outer surface of the rigid core to form a green tire with almost the same shape as that of a finished tire. Then the green tire is put into a vulcanization mold together with the rigid core for vulcanization shaping.

However, the ti re formed by the core method is hardly subjected to vulcanizing stretch. Thus, the band cord of the tire has no elongation in the state where the tire is not charged with internal pressure. Therefore, if a nylon cord having a small modulus is employed as a band cord of the ti re, the band cord has an insufficient binding force to the belt layer and it is thus difficult to suppress lifting.

To increase the binding force of the band ply, a high-modulus aramid fiber cord may be employed as a band cord. However, the aramid fiber cord is not heat-shrinkable. Thus, if the aramid fiber cord is used for the band cord of the tire manufactured by the core method, the band cord is not subjected to tension and thus is prone to become loose or snake within the tire. Such a tire may cause repeated compressi on strain at the snaking part of the band cord duri ng runni ng of the vehicle, thereby resulting in cord fracture.

JP 2004-306636A discloses a pneumatic tire that is manufactured according to the manufacturing method recited in the preamble of claim 1.

EP 1 106 390 A1 describes a pneumatic tire in which the crown section is manufactured by spiral winding substantially circumferentially oriented cords at a given winding pitch that depends on the cord diameter and applying tread compound directly to the wound cords.

### Citation List

### Patent Literature

Patent Literature 1: Japanese Unexamined Patent Application Publication No. H11-254906

### summary of invention

### Technical Problem

The present invention is devised in light of the foregoing problem. An object of the present invention is to provide a method for manufacturing a pneumatic tire, basically by which a composite cord of an aramid fiber and an heat-shrinkable organic fiber is used as a band cord, and an elongation of the composite cord at an inflection point and a modulus in a low elastic region are defined, whereby it is possible to exhibit a high binding force and improve high-speed durability performance, as well as suppress snaking of the band cord during vulcanization shaping and preventing fracture of the cord.

### solution to Problem

According to one aspect of the present invention, a method for manufacturing a pneumatic tire, the pneumatic tire comprising a carcass including a carcass ply extending from a tread portion through a side wall portion to a bead portion, a belt layer including a belt ply disposed outward of the carcass in the tread portion, and a band layer including a band ply disposed outward of the belt layer, the method comprising: a green tire formation process in which non-vulcanized ti re constitutional members including the carcass ply, the belt ply, and the band ply are attached in sequence on a rigid core to form a green ti re, the green tire formation process including a band ply formation step of winding a ribbon-shaped strip having at least one band cord covered with topping rubber in a spiral form on the belt ply to form the band ply, the band cord comprising a composite cord having a first strand formed of an aramid fiber and a second strand formed of a heat-shrinkable organic fiber which are twisted together, the composite cord having in a stress-elongation curve, a low-elastic region ranging from an origin point to an inflection point, and a high-elastic regi on exceeding the inflection poi nt, the composite cord having an elongation within a range of 0.9% to 3.3% at the inflection point, and having a modulus of 11N/% to 18N/% in the low-elastic regi on; and a vulcanization process in whi ch the green tire is put into a vulcanization mold together with the rigid core for vulcanization and shaping.

The heat-shri nkabl e organic fiber is preferably made of nylon, polyethylene terephthalate (PET), or polyethylene naphthalate (PEN).

The first strand preferably may have a total fineness in a range of not more than 2200 dtex.

The first strand preferably may have a total fineness in a range of not more than 2200 dtex.

### Advantageous Effects of Invention

In the present invention, a pneumatic tire is manufactured by the core method. Employed as a band cord in the pneumatic tire is a composite cord in which a first strand formed of an aramid fiber and a second strand formed of a heat-shrinkable organic fiber are twisted together.

During vulcanization shaping, the second strand in the composite cord shrinks by heat. Thus, even in the case of using the core method without vulcanization stretch, the composite cord shrinks in the tire and undergoes tension. Accordingly, it is possible to suppress looseness and snaking of the band cord and thus prevent fracture of the band cord.

The composite cord has an elongation within a range of 0.9% to 3.3% at an inflection point of its stress-elongation curve. The composite cord has a low-elastic region and a modulus in the low-elastic region within a range of 11N/% to 18N/%. If the elongation of the composite cord at the inflection point exceeds 3.3%, the binding force of the composite cord to the belt layer becomes insufficient during high-speed running at which a large centrifugal force acts on the tire, and thus improvement of high-speed durability cannot be expected. Meanwhile, if the elongation of the composite cord at the inflection point is less than 0.9%, it is necessary to decrease the number of twists of the first strand formed from aramid fiber. However, such a cord exerts large influence on the physical properties of the aramid fiber, which may result in deterioration of ride quality due to high modulus or cord fracture due to snaking of the composite cord.

Even if the elongation of the composite cord at the inflection point falls within a proper range, when the modulus in the low elastic region is less than 11N/%, the binding force for the belt layer decreases, and thus no sufficient effect of improving high-speed durability can be obtained. If the modulus in the low-elastic region exceeds 31N/%, influence on physical properties of the aramid fiber becomes large, which may cause deterioration in ride quality due to high modulus and cord fracture due to snaking of the composite cord. Therefore, to combine realization of high-speed durability and suppression of cord fracture, it is important to regulate the composite cord in both the elongation at the inflection point and modulus in the low-elastic region.

### Brief Description of Drawings

FIG. 1 is a cross-section view of one embodiment of a pneumatic tire produced by a manufacturing method of the present invention;
FIG. 2 is a cross-section view illustrating a green tire formation process;
FIG. 3 is a cross-section view illustrating a vulcanization process;
FIG. 4 is a cross-section view illustrating a band ply formation step;
FIG. 5 is a perspective view of a strip for band ply;
FIGS. 6(A) and 6(B) are perspective views of composite cords; and
FIG. 7 is a graph illustrating a stress-elongation curve of the composite cord.

### Description of Embodiments

One embodiment of the present invention will be descri bed bel ow with reference to the drawings.

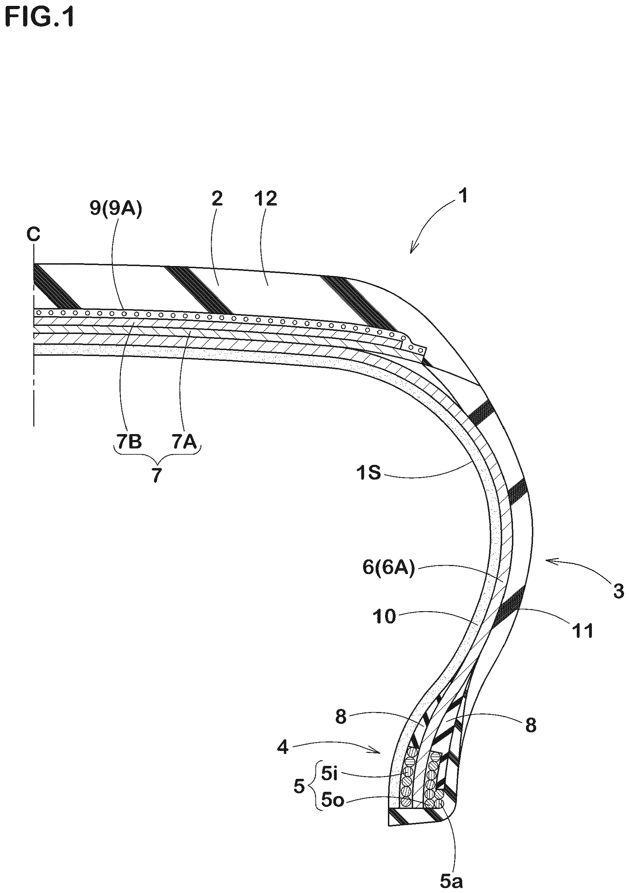

FIG. 1 is a cross-section view of one embodiment of a pneumatic tire 1 manufactured by a manufacturing method of the present invention. The pneumatic tire 1 includes a carcass 6 extending from a tread portion 2 through a side wall portion 3 to bead portions 4, a bel t layer 7 di sposed radially outward of the carcass 6 in the tread portion 2, and a band layer 9 disposed radially outward of the belt layer.

The carcass 6 includes at least one, in this example, one carcass ply 6A in which a carcass cord is arranged in a radial direction of the tire. The carcass ply 6A has a toroidal shape extending between a pair of bead portions 4 and 4. A bead core 5 is arranged at each of the bead portions 4. The bead core 5 comprises an axially inner core piece 5i and an axially outer core piece 5o. Both end porti ons of the carcass pl y 6A are terminated at the position of the bead core 5 arranged at each of the bead portions 4, without being folded back around the bead core 5. specifically, the both ends of the carcass ply 6A are sandwiched between the core pieces 5i and 5o of the bead core 5.

The core pieces 5i and 5o of the bead core 5 are formed by winding a non-extensible bead wire 5a in a spiral form in a tire circumferential direction. The number of windings of the bead wire 5a for the outer core piece 5o is desirably about 1.2 to 2.0 times, for example, larger than that for the inner core pieces 5i. Accordingly, the outer core pieces 5i have larger rigidity than that of the inner core pieces 5i. This is effective in relatively enhancing bending rigidity of the bead portions 4 and improving steering stability and the like while suppressing the total number of windings of the bead wire 5a.

Each bead portion 4 includes a bead apex 8. The bead apex 8 is formed of rubber having a hardness of from 80 to 100 degrees, for example, and extends radially outwardly in a tapered shape from the core pieces 5i and 5o.

The hardness of the rubber herein refers to durometer "A" hardness measured at 23°C according to JIS-K6253.

The belt layer 7 includes at least one, in this example, two belt plies 7A and 7B in which belt cords are arranged at 10 to 35 degrees, for example, with respect to the tire circumferential direction. In the belt layer 7, the belt cords cross each other between the plies 7A and 7B. Accordingly, the belt layer 7 has high rigidity and exerts hoop effect on almost the entire width of the tread portion 2.

The band layer 9 includes a band ply 9A in which a band cord i s wound in a spiral form in the ti re circumferential direction. For the band ply 9A, a pair of right and left edge band plies covering only the tire axially outer end of the belt layer 7 or a full band ply covering almost the entire length of the belt layer 7, may be selected as appropriate. In this embodiment, the band layer 9 is constituted as one full band ply.

A thin inner liner 10 is arranged on an inner surface of the carcass 6 to form an inner cavity surface 1s of the tire. The inner liner 10 is made of air-impermeable rubber such as butyl rubber or halogenated butyl rubber, for example, to prevent leakage of air charged in the inner cavity of the tire.

side wall rubber 11 is disposed on an outer surface of the carcass 6 to form an outer surface of the side wall portion 3.

Tread rubber 12 is disposed radially outward of the band layer 9 to form an outer surface of the tread portion 2.

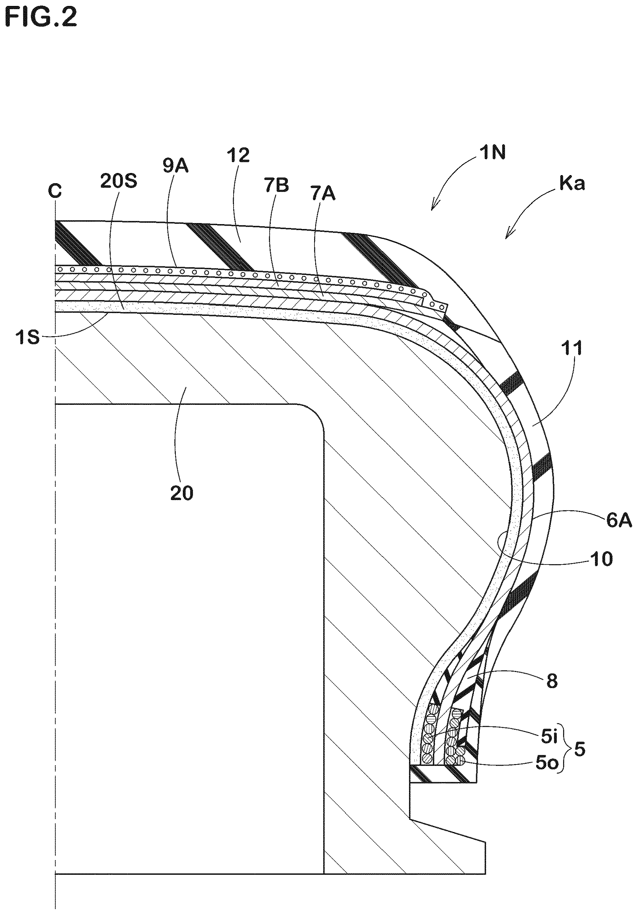

Next, a method for manufacturing the pneumatic tire 1 will be described. A rigid core 20 is used for the manufacturing method in this embodiment, as shown in FIG. 2. The rigid core 20 has on an outer surface thereof a tire formation surface portion 20s that substantially matches the shape of the inner cavity surface 1s of the pneumatic tire 1.

As shown in FIG. 2, in a green tire formation process Ka, tire constitutional members are attached to the tire formation surface portion 20s of the rigid core 20 to form a green tire 1N having a shape close to that of the pneumatic ti re 1. The tire constitutional members include at least the carcass ply 6A, the belt plies 7A and 7B, the band ply 9A, and the like, which are non-vulcanized.

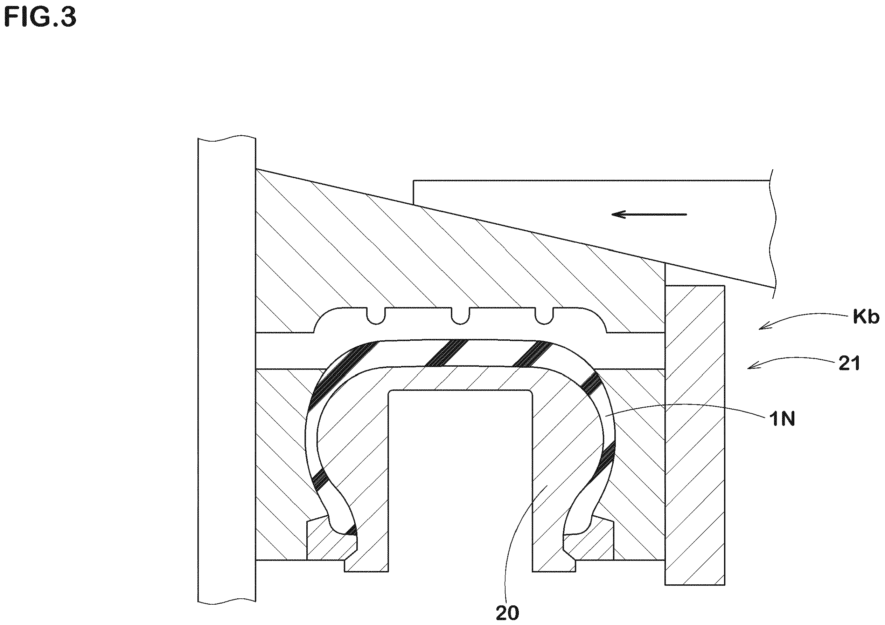

As shown in FIG. 3, in a vulcanization process Kb, the green tire 1N is put into a vulcanization mold 21 together with the rigid core 20 for vulcanization and shaping. Accordingly, the pneumatic tire 1 is manufactured.

The green tire formation process Ka includes, for example, an inner liner formation step of attaching a member for formation of the inner liner 10 to the tire formation surface portion 20s of the rigid core 20, a carcass ply formation step of attaching a member for formation of the carcass ply 6A, a bead core formation step of attaching a member for formation of the bead core 5, a bead core formation step of attaching a member for formation of the bead apexes 8, a belt ply formation step of attaching members for formation of the belt plies 7A and 7B, a side wall formation step of attaching a member for formation of the side wall rubber 11, a tread formation step of attaching a member for formation of the tread rubber 12, and a band ply formation step of forming the band ply 9A. For all the foregoing steps except for the band ply formation step, various known steps can be employed as appropriate. Therefore, descriptions of these steps will be omitted.

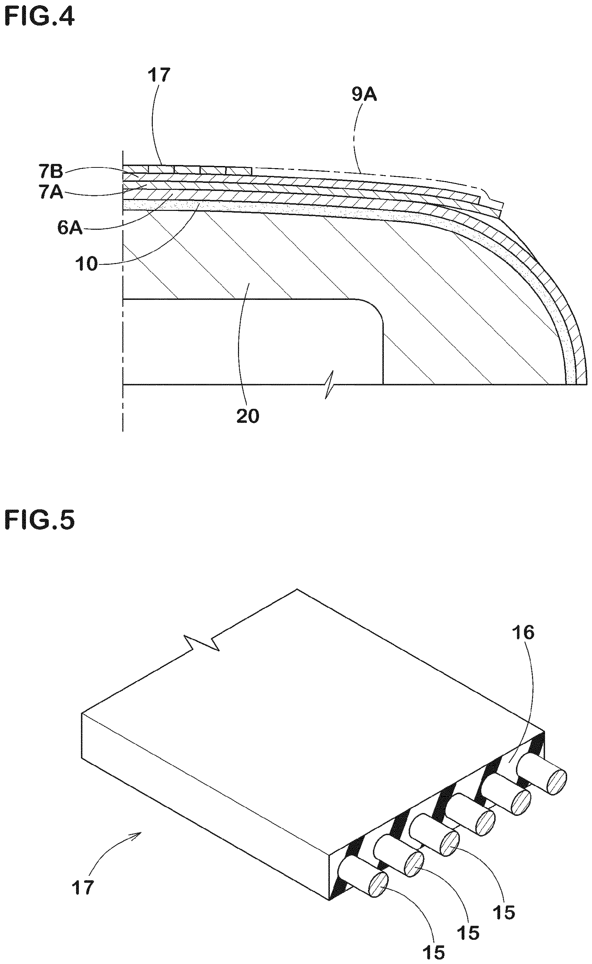

At the band ply formation step, as shown in FIG. 4 or 5, a small-width ribbon-shaped strip 17 in which a band cord arrangement body including one band cord 15 or a plurality of parallel band cords 15 is covered with topping rubber 16, is wound in a spiral on the belt ply 7B to form the band ply 9A.

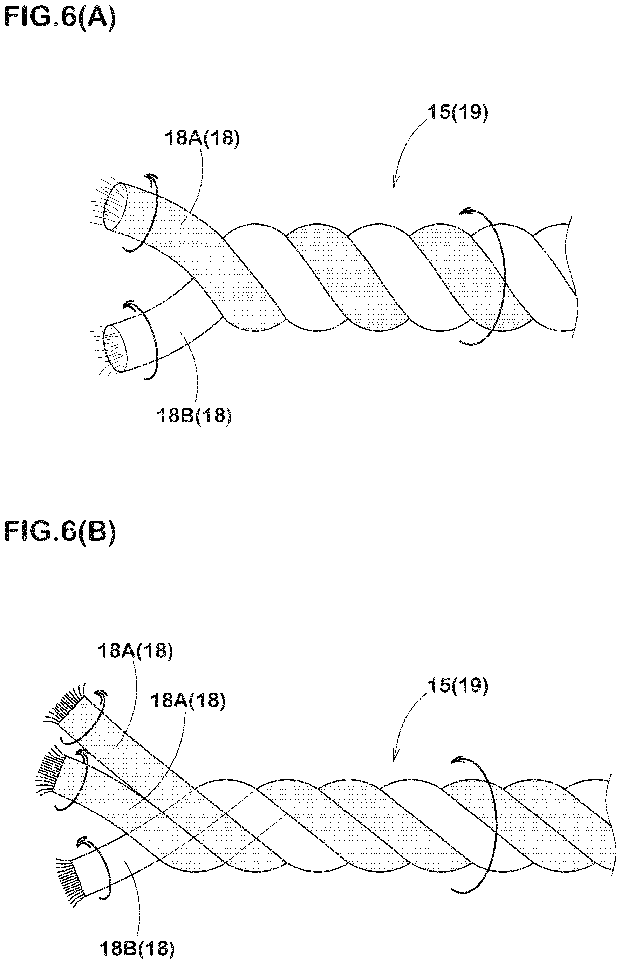

The band cord 15, as shown in FIG. 6, is formed of a composite cord 19 including a first strand 18A formed of an aramid fiber and a second strand 18B formed of a heat-shrinkable organic fiber, which are twisted together.

The composite cord 19 is desirably any of the following cords (a) to (c). Each of the strands is twisted downward in advance:
(a) As shown in FIG. 6(A), a cord formed of total two strands including one first strand 18A and one second strand 18B;
(b) As shown in FIG. 6(B), a cord formed of total three strands including two first strands 18A and one second strand 18B; and
(c) Although not shown, a cord formed of total three strands including one first strand 18A and two second strands 18B.

In the case of the cord (b), first, the two first strands 18A are twisted together to form an intermediate strand, and then the intermediate strand and the one second strand 18B are twisted together.

Similarly, in the case of the cord (c), first, the two second strands 18B are twisted together to form an intermediate strand, and then the intermediate strand and the one first strand 18B are twisted together.

However, in these cases, the intermediate strand is formed and thus desired characteristics may not be readily obtained under influence of large twists. Thus, as shown in FIG. 6(B), the three strands may be twisted together at the same time without forming an intermediate strand.

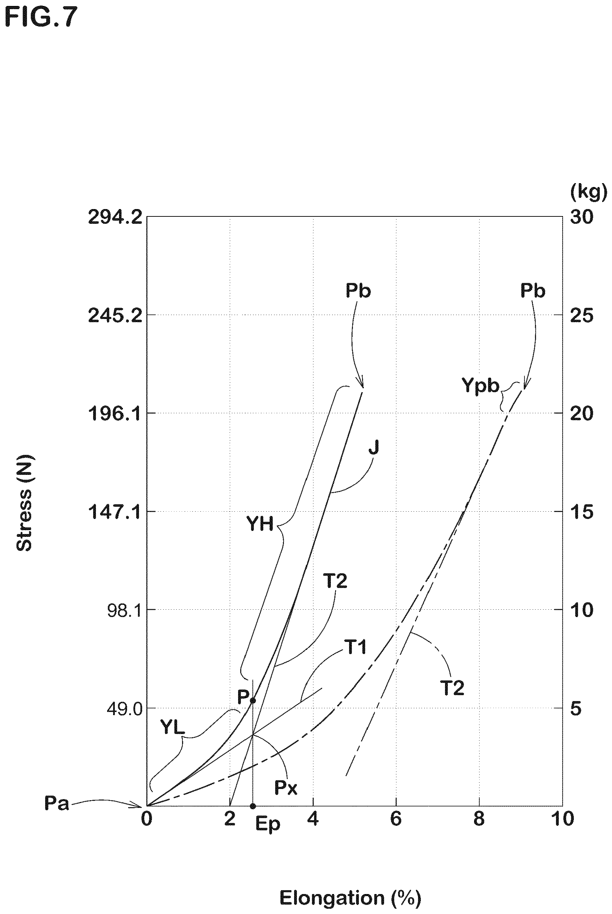

FIG. 7 shows a stress-elongation curve J of the composite cord 19. In the stress-elongation curve J, the composite cord 19 has a low-elastic regi on YL ranging from an origin poi nt 0 to an inflection poi nt P, and a high-elastic regi on YH exceeding the inflection poi nt P. The composite cord 19 has an elongation Ep at the inflection point P within a range of 0.9% to 3.3%. The composite cord 19 has modulus M within a range of 11N/% to 18N/% in the low-elastic region YL.

The inflection poi nt P is defi ned as a poi nt at whi ch a vertical line passing through an intersection point Px between a tangent line T1 of the stress-elongation curve J passing through a point Pa with an elongation of 0% and a tangent line T2 of the stress-elongation curve J passing through a fracture point Pb, crosses the stress-elongation curve J.

As shown by a dashed-dotted line in FIG. 7, if the stress-elongation curves J changes sharply in a fracture-point neighborhood Ypb including the fracture point Pb, the tangent line T2 is determined excluding the fracture-point neighborhood Ypb. The modulus M of the composite cord 19 in the low-elastic region YL is defined as an inclination of the tangent line T1.

As in the foregoing, in the composite cord 19 in which the first strand 18A made of the aramid fiber and the second strand 18B made of the heat-shrinkable organic fiber are twisted together, the second strand 18B shrinks by heat in the vulcanization process Kb. Thus, even in the case of using the core method, it is possible to suppress looseness and snaking of the composite cord 19 within the tire and prevent cord fracture.

If the elongation Ep of the composite cord 19 exceeds 3.3% at the inflection point P, the composite cord 19 exhibits low modulus during high-speed running at which a large centrifugal force acts, for example, and thus the binding force of the composite cord 19 (band cord 15) becomes insufficient and high-speed durability cannot be improved sufficiently. Meanwhile, if the elongation Ep of the composite cord 19 is less than 0.9% at the inflection point P, it is necessary to decrease the number of twists of the first strand 18A made of aramid fiber. However, such a cord is largely influenced by physical properties of aramid fiber, which may result in deterioration of ride quality due to a high modulus or cord fracture due to snaking of the composite cord. From this point of view, the elongation Ep of the composite cord 19 at the inflection point P is preferably 1.6% or more.

Even if the elongation Ep of the composite cord 19 at the inflection point P is proper, when the modulus M of the composite cord 19 in the low-elastic region YL is less than 11N/%, the binding force of the composite cord 19 decreases and high-speed durability cannot be improved sufficiently. In contrast, when the modulus M exceeds 31N/%, the physical properties of the aramid fiber become dominant, which may lead to deterioration of ride quality and cord fracture. Therefore, to combine realization of high-speed durability and suppression of cord fracture, it is necessary to regulate the composite cord 19 in both the elongation Ep at the inflection point P and the modulus M in the low-elastic region YL within the foregoing ranges. The modul us M is 11N/% or more and 18N/% or less.

The elongation Ep of the composite cord 19 at the inflection point P and the modulus M of the composite cord 19 in the low-elastic region YL can be adjusted by thickness (fineness), number of downward twists, number of upward twists, and the like of the first and second strands 18A and 18B.

The heat-shrinkable organic fiber here desirably has a heat-shrinkage ratio of 3.0% or more. If the heat-shrinkage ratio falls under 3.0%, no sufficient effect of suppressing snaking of the band cord can be produced. The organic fiber is desirably made of nylon, polyethylene terephthalate (PET), or polyethylene naphthalate (PEN), for example. The foregoing "heat-shrinkage ratio" complies with JIS-L1017, 8.10, Section (b) "Post-heating Dry Heat-shrinkage Ratio (Type B)," and refers to post-heating dry heat-shrinkage ratio of the cord after being heated at a temperature of 180°C for 30 minutes in unloaded condition.

In the composite cord 19 in the embodiment, the first strand 18A and the second strand 18B are the same in downward twisting direction and upward twisting direction. The number of downward twists na of the fi rst strand 18A i s about (42±5)/10 cm, for example, and is set smaller than the number of downward twi sts nb and the number of upward twists nc of the second strand 18B.

In the first strand 18A, the total fineness of aramid fiber is preferably set in a range of from not more than 2200 dtex. If the total fineness of aramid fiber exceeds 2200 dtex, ride quality may deteriorate. In addition, in the second strand 18A, the total fineness of heat-shrinkable organic fiber is preferably set in a range of not more than 1100 dtex. If the total fineness exceeds of organic fiber 1100 dtex, it is difficult to set the modulus in the low-elastic region YL within the foregoing range.

As in the foregoing, a particularly preferred embodiment of the present invention is described in detail. However, the present invention is not limited to this but may be carried out in various modified manners.

### Comparison test

Pneumatic tires (size: 215/45R17) having the internal structure shown in FIG. 1 were prototyped by the manufacturing method using a rigid core of the present invention based on specifications in Tables 1 and 2. Then, the prototyped tires were tested for ride quality, durability performance (band cord fracture), and high-speed durability performance.

Specifications for the carcass, belt layer, and band layer except for those shown in Tables 1 and 2 are the same as follows.

| |
|---|
| Carcass |
| Number of plies: 2 |
| cord: 1100 dtex (PET) |
| cord angle: 90 degrees |
| Number of cord implants: 38 units/5 cm |
| Belt layer |
| Number of plies: 2 |
| Cord: 1 × 3 × 0.27 HT (steel) |
| Cord angle: +20 degrees/-20 degrees |
| Number of cord implants: 40 units/5 cm |
| Band layer |
| Number of ply: 1 (full-band) |
| Number of cord implants: 40 units/5 cm |

Tension test was conducted with a clamp interval of 250 mm and at a speed of 300 mm/minute until the cord was fractured, and the inflection point P and the modulus M of the band cord in the low-elastic region YL were determined based on the "stress-elongation curve J" obtained at that time. If the band cord was formed from one kind of organic fiber and thus does not have an inflection point, the modulus M in the low-elastic region YL was determined as an inclination of a tangent line to the "stress-elongation curve J" with an elongation of 3%.

### (1) Ride comfort test:

The test tires were mounted on wheel rims of 17 x 7.0 JJ with an inner pressure of 200 kPa, and then attached to all of wheels of a vehicle (2,000-cc automobile manufactured in Japan). A test driver drove the vehicle on a dry asphalt road, and performed sensory evaluation of the tires on a scale of 1 to 10 for roughness, upthrust, and dumping. Larger values are more favorable.

### (2) Durability performance test (band cord fracture):

A drum running tester was used to carry out a test run of 30,000 km with the tires mounted on wheel rims of 17 x 7.0 JJ with an inner pressure of 200 kPa, under a load (normal load) and at a speed of 60 km/h. After the running, the tires were dismantled to check for the presence or absence of band cord fracture. Evaluations are as follows.
A: There is no fracture in band cords
B: There is one fracture in band cords
C: There are two or more fractures in band cords

### (3) High-speed durability performance test:

A drum running tester was used to carry out a test run with the tires mounted on wheel rims of 17 x 7.0 JJ with an inner pressure of 200 kPa, in a step speed method according to load/speed performance test defined by ECE30. The test was started at a speed of 80 km/h, and running distances were measured unti the ti res were broken with a speed increase of 10 km/h after each running of 10 minutes. Test results are provided in an index of 100 representing a value in Comparative Example 1. Larger values are more favorable.

### (4) Tire mass:

Each of the tires was weighed. The measured weights are provided in an index of 100 representing a value in Comparative Example 1. Smaller indexes are more favorable.

In the column of material in Tables 1 and 2, "N" denotes nylon 66, "A" denotes aramid, "PET" denotes polyethylene terephthalate, and "PEN" denotes polyethylene naphthalate. The heat shrinkage ratio of N is 4.5%, the heat shrinkage ratio of A is 0%, the heat shrinkage ratio of PET is 4.0%, and the heat shrinkage ratio of PEN is 1.6%.

In the column of cord configuration in Tables 1 and 2, the reference numerals refer to the following.
X/2 : Cord in which two downward-twisted strands X are upward twisted together
X/Y/2: Cord in which one downward-twisted strand X and one downward-twisted strand Y are upward twisted together
X/1: Cord formed from one downward-twisted strand X (single-twisted cord)
X/X/Y/Y/4: Cord in which total four strands including two downward-twisted strands X and two downward-twisted strands Y are upward twisted together
X/X/Y/3: Cord in which total three strands including two downward-twisted strands X and one downward-twisted strand Y are upward twisted together
(X/2+Y/2)/2: Cord in which one intermediate strand of two downward-twisted strands X and one intermediate strand of two downward-twisted strands Y are upward twisted together
(X+Y/2)/2: Cord in which one downward-twisted strand X and one intermediate strand of two downward-twisted strands Y are upward twisted together

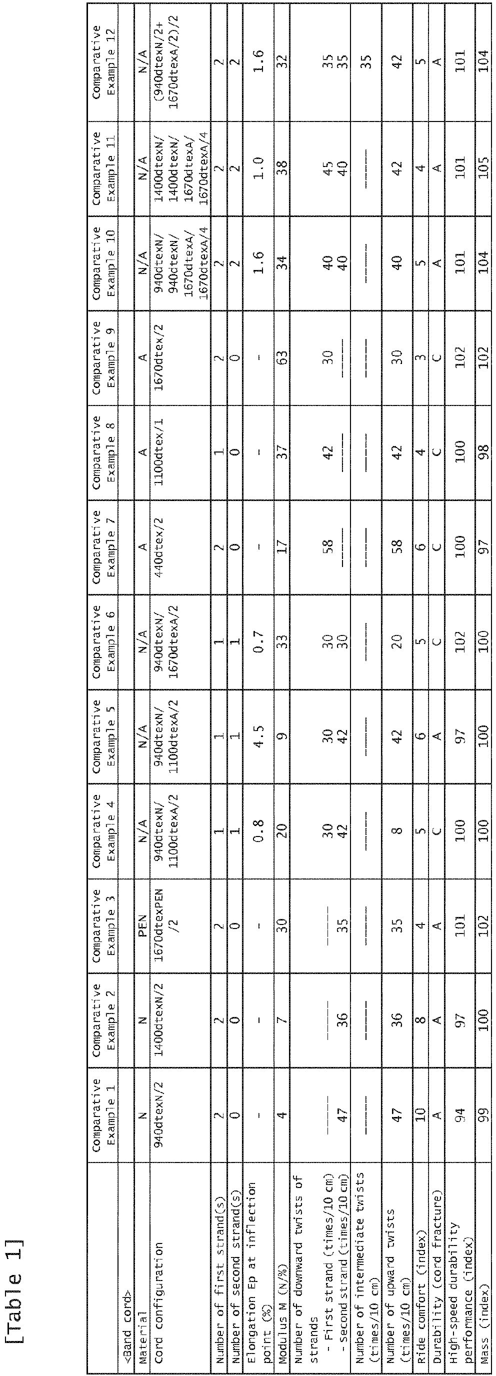

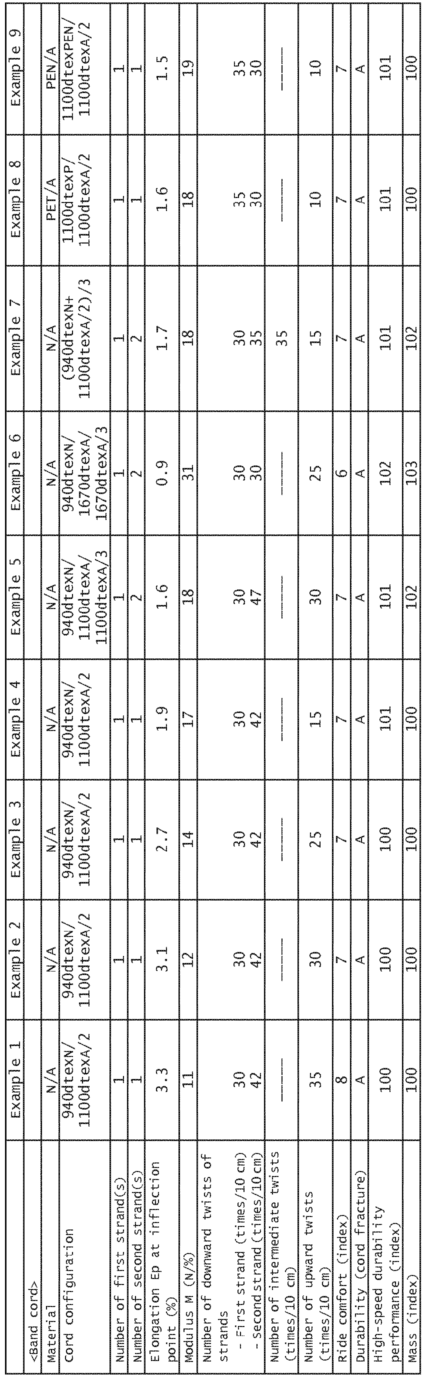

**[Table 2]**

| | Comparative Example A1 | Example A1 | Example A2 | Example A3 | Example A4 | Comparative Example A2 | Comparative Example A3 | Example A5 | Example A6 | Example A7 | Comparative Example A4 |
|---|---|---|---|---|---|---|---|---|---|---|---|
| <Band cord> | | | | | | | | | | | |
| Material | N/A | | | | | | | | | | |
| cord configuration | 940dtexN/ | | | | | | | | | | |
| | 1100dtexA/2 | | | | | | | | | | |
| Number of first strand(s) | | | | | | 1 | | | | | |
| Number of second strand(s) | | | | | | 1 | | | | | |
| Elongation Ep at inflection poi nt (%) | 0.7 | 0.9 | 1.6 | 2.7 | 3.3 | 3.5 | 2.7 | 2.7 | 2.7 | 2.7 | 2.7 |
| Modulus M (N/%) | 14 | 14 | 14 | 14 | 14 | 14 | 9 | 11 | 18 | 31 | 33 |
| Number of downward twists of strands | | | | | | | | | | | |
| - First strand (times/10 cm) | 23 | 24 | 25 | 30 | 33 | 36 | 27 | 29 | 30 | 32 | 35 |
| - Second strand (times/10 cm) | 42 | 42 | 42 | 42 | 42 | 42 | 42 | 42 | 42 | 42 | 42 |
| Number of intermediate twists (times/10 cm) | --- | | | | | | | | | | |
| Number of upward twists (units/10 cm) | 28 | 27 | 26 | 25 | 24 | 23 | 42 | 30 | 26 | 12 | 11 |
| Ride comfort (index) | 7 | 7 | 7 | 7 | 7 | 7 | 7 | 7 | 7 | 6 | 5 |
| Durability (cord fracture) | C | B | A | A | A | A | A | A | A | A | A |
| High-speed durability performance (index) | 100 | 100 | 100 | 100 | 100 | 98 | 98 | 99 | 100 | 101 | 101 |
| Mass (index) | 100 | 100 | 100 | 100 | 100 | 100 | 100 | 100 | 100 | 100 | 100 |

The foregoing tests have revealed that the tires of examples can improve high-speed durability performance and suppress cord fracture while maintaining ride quality.

### Reference Signs List

- 1N: Green tire
- 2: Tread portion
- 3: Side wall portion
- 4: Bead portion
- 6: Carcass
- 6A: Carcass ply
- 7: Belt layer
- 7A, 7B: Belt ply
- 9: Band layer
- 9A: Band ply
- 15: Band cord
- 16: Topping rubber
- 17: Strip
- 18: Strand
- 18A: First strand
- 18B: Second strand
- 19: Composite cord
- 20: Rigid core
- 21: vulcanization mold
- Ka: Green tire formation process
- Kb: Vulcanization process
- P: Inflection point
- YH: High-elastic region
- YL: Low-elastic region

## Claims

1. A method for manufacturing a pneumatic tire, the pneumatic tire comprising a carcass (6) including a carcass ply (6A) extending from a tread portion (2) through a side wall portion (3) to a bead portion (4), a belt layer (7) including a belt ply (7A, 7B) disposed outward of the carcass (6) in the tread portion (2), and a band layer (9) including a band ply (9A) disposed outward of the belt layer (7), the method comprising:
a green tire formation process (Ka) in which non-vulcanized tire constitutional members including the carcass ply (6A), the belt ply (7A, 7B), and the band ply (9A) are attached in sequence to form a green tire (1N), the green tire formation process (Ka) including a band ply formation step of winding a ribbon-shaped strip (17) having at least one band cord (15) covered with topping rubber (16) in a spiral form on the belt ply (7A, 7B) to form the band ply (9A), the band cord (15) comprising a composite cord (19) having a first strand (18A) formed of an aramid fiber and a second strand (18B) formed of a heat-shrinkable organic fiber which are twisted together, the composite cord (19) having in a stress-elongation curve, a low-elastic regi on (YL) ranging from an ori gi n poi nt to an inflection point (P), and a high-elastic region (YH) exceeding the inflection point (P), the composi te cord (19) having an el ongati on within a range of 0.9% to 3.3% at the inflection point (P),
**characterized in that**
in the green ti re formation process (Ka), said non-vulcanized tire constitutional members are attached in sequence on a rigid core (20) to form a green tire (1N),
and **in that** the composite cord (19) has a modulus (M) of 11N/% to 18N/% in the low-elastic region (YL) of said stress-elongation curve; and
by a vulcanization process (Kb) in which the green tire (1N) is put into a vulcanization mold (21) together with the rigid core (20) for vulcanization and shaping.

2. The method for manufacturing a pneumatic tire according to Claim 1, wherein the heat-shrinkable organic fiber is made of nylon, polyethylene terephthalate (PET), or polyethylene naphthalate (PEN).

3. The method for manufacturing a pneumatic tire according to claim 1 or 2, wherein the first strand (18A) has a total fineness in a range of not more than 2200 dtex.

4. The method for manufacturing a pneumatic tire according to any of claims 1 to 3, wherein the second strand (18B) has a total fineness in a range of not more then 1100 dtex.

## Patentansprüche

1. Verfahren zum Herstellen eines Luftreifens, wobei der Luftreifen eine Karkasse (6) umfasst, die eine Karkasslage (6A), die sich von einem Laufflächenabschnitt (2) durch einen Seitenwandabschnitt (3) zu einem Wulstabschnitt (4) erstreckt, eine Gürtelschicht (7), die eine Gürtellage (7A, 7B) umfasst, welche außerhalb der Karkasse (6) in dem Laufflächenabschnitt (2) angeordnet ist, und eine Bandschicht (9) aufweist, die eine Bandlage (9A) umfasst, die außerhalb der Gürtellage (7) angeordnet ist, wobei das Verfahren umfasst:
einen Rohreifen-Formgebungsprozess (Ka), in welchem nicht vulkanisierte Reifenbestandteile, die die Karkasslage (6A), die Gürtellage (7A, 7B) und die Bandlage (9A) umfassen, aufeinanderfolgend angebracht werden, um einen Rohreifen (1 N) zu bilden, wobei der Rohreifen-Formgebungsprozess (Ka) einen Bandlagen-Formgebungsschritt eines Wickelns eines bandförmigen Streifens (17), der zumindest einen Bandkord (15) aufweist, der mit Gummierungskautschuk (16) bedeckt ist, in einer Spiralform auf die Gürtellage (7A, 7B) umfasst, um die Bandlage (9A) zu bilden, wobei der Bandkord (15) einen Verbundkord (19) mit einem ersten Strang (18A), der aus einer Aramidfaser gebildet ist, und einem zweiten Strang (18B), der aus einer wärmeschrumpfbaren organischen Faser gebildet ist, die miteinander verdrillt sind, umfasst, wobei der Verbundkord (19) eine Spannungs-Dehnungs-Kurve, einen Bereich (YL) mit geringer Elastizität, der von einem Ursprungspunkt zu einem Wendepunkt (P) reicht, und einen Bereich mit hoher Elastizität (YH), der über den Wendepunkt (P) hinausgeht, aufweist, wobei der Verbundkord (19) an dem Wendepunkt (P) eine Dehnung in einem Bereich von 0,9 % bis 3,3 % aufweist,
**dadurch gekennzeichnet, dass**
in dem Rohreifen-Formgebungsprozess (Ka) die nicht vulkanisierten Reifenbestandteile aufeinanderfolgend an einem starren Kern (20) angebracht werden, um einen Rohreifen (1 N) zu bilden,
und dass der Verbundkord (19) in dem Bereich mit niedriger Elastizität (YL) der Spannungs-Dehnungs-Kurve einen Modul (M) von 11 N/% bis 18 N/% aufweist; und
durch einen Vulkanisierungsprozess (Kb), in welchem der Rohreifen (1 N) zusammen mit dem starren Kern (20) in eine Vulkanisationsform (21) zum Vulkanisieren und zur Formgebung gesetzt wird.

2. Verfahren zum Herstellen eines Luftreifens nach Anspruch 1, wobei die wärmeschrumpfbare organische Faser aus Nylon, Polyethylenterephthalat (PET) oder Polyethylennaphthalat (PEN) hergestellt wird.

3. Verfahren zum Herstellen eines Luftreifens nach Anspruch 1 oder 2, wobei der erste Strang (18A) eine Gesamtfeinheit in einem Bereich von nicht mehr als 2200 dtex aufweist.

4. Verfahren zum Herstellen eines Luftreifens nach einem der Ansprüche 1 bis 3, wobei der zweite Strang (18B) eine Gesamtfeinheit in einem Bereich von nicht mehr als 1100 dtex aufweist.

## Revendications

1. Procédé pour fabriquer un bandage pneumatique, le bandage pneumatique comprenant une carcasse (6) incluant une nappe de carcasse (6A) s'étendant depuis une portion formant bande de roulement (2) via une portion de paroi latérale (3) jusqu'à une portion de talon (4), une couche de ceinture (7) incluant une nappe de ceinture (7A, 7B) disposée à l'extérieur de la carcasse (6) dans la portion formant bande de roulement (2), et une couche en bande (9) incluant une nappe de bande (9A) disposée à l'extérieur de la couche de ceinture (7), le procédé comprenant :
un processus de formation de pneumatique cru (Ka) dans lequel des éléments constitutionnels d'un pneumatique non vulcanisé incluant la nappe de carcasse (6A), la nappe de ceinture (7A, 7B), et la nappe de bande (9A) sont attachés en séquence pour former un pneumatique cru (1N), le processus de formation de pneumatique cru (Ka) incluant une étape de formation de nappe de bande consistant à enrouler une bande en forme de ruban (17) ayant au moins un câblé de bande (15) couvert avec un caoutchouc d'enrobage (16) dans une forme en spirale sur la nappe de ceinture (7A, 7B) pour former la nappe de bande (9A), le câblé de bande (15) comprenant un câblé composite (19) ayant un premier brin (18A) formé d'une fibre aramide et un second brin (18B) formée d'une fibre organique thermorétractable qui sont torsadés ensemble, le câblé composite (19) ayant, dans une courbe d'élongation sous contrainte, une région faiblement élastique (YL) allant depuis un point d'origine jusqu'à un point d'inflexion (P), et une région hautement élastique (YH) au-delà du point d'inflexion (P), le câblé composite (19) ayant une élongation dans une plage de 0,9 % à 3,3 % au point d'inflexion (P),
**caractérisé en ce que**
dans le processus de formation de pneumatique cru (Ka), lesdits éléments constitutionnels de pneumatique non vulcanisé sont attachés en séquence sur un noyau rigide (20) pour former un pneumatique cru (1N),
et **en ce que** le câblé composite (19) a un module (M) de 11N/% jusqu'à 18N/% dans la région faiblement élastique (YL) de ladite courbe d'élongation sous contrainte ; et
par un processus de vulcanisation (Kb) dans lequel le pneumatique cru (1N) est placé dans un moule de vulcanisation (21) ensemble avec le noyau rigide (20) pour la vulcanisation et la mise en forme.

2. Procédé pour fabriquer un bandage pneumatique selon la revendication 1, dans lequel la fibre organique thermorétractable est faite de nylon, de polyéthylène téréphtalate (PET), ou de polyéthylène naphthalate (PEN).

3. Procédé pour fabriquer un bandage pneumatique selon la revendication 1 ou 2, dans lequel le premier brin (18A) a une finesse totale dans une plage qui ne dépasse pas 2200 dtex.

4. Procédé pour fabriquer un bandage pneumatique selon l'une quelconque des revendications 1 à 3, dans lequel le second brin (18B) a une finesse totale dans une plage qui ne dépasse pas 1100 dtex.
